# EUROPÄISCHE PATENTSCHRIFT

(11) **EP 2 896 722 B1**
(45) Veröffentlichungstag und Bekanntmachung des Hinweises auf die Patenterteilung: **18.07.2018**
(21) Anmeldenummer: 15000089.1
(22) Anmeldetag: 15.01.2015
(51) Int. Cl.: C25C 3/08, C25C 3/16, C25C 7/02, H02M 7/19

(54) **Anordnung zur Versorgung eines Elektrolyseurs mit Gleichstrom und Anlage zur Durchführung einer Elektrolyse**
Assembly for supplying an electrolyzer with direct current and facility for carrying out electrolysis
Dispositif pour l'alimentation d'un électrolyseur à courant continu et installation pour la réalisation d'une électrolyse

(30) Priorität: 15.01.2014 DE 102014000518
(43) Veröffentlichungstag der Anmeldung: 22.07.2015
(73) Patentinhaber: Hitachi Zosen Inova Etogas GmbH, 70565 Stuttgart (DE)
(72) Erfinder: Dragoni, Mario, 70565 Stuttgart (DE); Doll, Michael, 70565 Stuttgart (DE); Brinner, Andreas, 71277 Rutesheim (DE)
(74) Vertreter: Leinweber & Zimmermann

(56) Entgegenhaltungen:
- EP-A2- 2 641 875
- CN-A- 103 296 919
- CN-U- 2 049 841
- CN-Y- 201 286 063
- CN-Y- 201 294 451
- DE-A1-102006 015 599
- FR-A1- 2 932 033
- US-A- 3 178 363

## Beschreibung

Die Erfindung betrifft eine Anordnung zur Versorgung eines Elektrolyseurs mit Gleichstrom, mit einer elektrischen Kopplung einer ersten Gruppe von Halbleiter-Bauelementen eines Mehrfasen-, insbesondere Dreifasen-Gleichrichters an den ersten Gleichstromanschluss des Elektrolyseurs und einer zweiten Gruppe von Halbleiter-Bauelementen des Gleichrichters an den zweiten Gleichstromanschluss des Elektrolyseurs, sowie eine Elektrolyseanlage.

Derartige Gleichstromversorgungsanordnungen sind in der Technik der Elektrolyseanlagen gut bekannt. Denn bekannterweise sind Elektrolyseure, beispielsweise zur Wasserelektrolyse ausgelegte Elektrolyseure vom Platten-Typ, wie in der EP 02 12 240 B1 beschrieben, mit Gleichstrom zu versorgen.

Wird, wie im Rahmen dieser Erfindung vorgesehen, auf eine Wasserstofferzeugung des Elektrolyseurs/der Elektrolyseanlage im industriellen Maßstab abgestellt, etwa durch Verwendung eines oder mehrerer Elektrolyseure mit einer Leistung in der Größenordnung 10 bis 100 kW oder mehr, so erfolgt die elektrische Versorgung des Elektrolyseurs bzw. der Elektrolyseanlage über gleichgerichteten Drehstrom. Die Ankopplung des Elektrolyseurs bzw. der Anlage kann dann an das Niederspannungsnetz (im Bereich von 200 V) oder über Transformation auch an das Mittelspannungsnetz (etwa 20 kV) erfolgen.

Demnach sind typische Elektrolyseanlagen industrieller Basis üblicherweise aus drei Baugruppen aufgebaut. Eine erste Baugruppe betrifft die Spannungsherabsetzung von der Mittelspannungsebene auf die Niederspannungsebene mit geeigneten Transformatoren. Die zweite Baugruppe betrifft das Gleichrichten des Drehstroms (Dreiphasen-Drehstroms) in Gleichstrom. Die dritte Baugruppe betrifft den Elektrolyseur bzw. die mehreren Elektrolyseure einer Elektrolyseanlage selbst.

Üblicherweise werden die erste und zweite Baugruppe zusammengefasst und in einem Elektroraum untergebracht. In dem Elektroraum werden die gleichstromseitigen Ausgänge, beispielsweise die Anode bildend, auf eine Anodenleitung zusammengelegt und diese mit dem beispielsweise durch eine Endplatte des Elektrolyseurs gebildeten Gleichstromanschluss des Elektrolyseurs verbunden. In gleicher Weise werden dann die gleichstromseitigen Anschlüsse der Halbleiter-Bauelemente des Dreifasen-Gleichrichters, die die Kathode bilden, auf gemeinsamer Kathodenleitung mit dem üblicherweise in einem getrennten Raum, dem Elektrolyseraum untergebrachten Elektrolyseurs verbunden, über dessen durch seine zweite Endplatte gebildeten Gleichstromanschluss. Die Kathoden- und Anodenleitung werden dabei etwa aus mit hohem Querschnitt versehene Kupferschienen gebildet, und können auf diese Weise ohne weiteres die erforderlichen hohen Ströme in der Größenordnung von etwa 10 kA tragen. Alternativ kommen auch Kabelleitungen mit niedrigerem Querschnitt zum Einsatz, bei dem die durch den Stromtransport erzeugte Wärme über ein Kühlsystem aufgenommen und anderweitig genutzt werden kann.

EP 2 641 875 A2 offenbart eine Elektrolyse-Vorrichtung zur Aufbereitung von Schmutzwasser, bei der Umrichtermodule integral mit der Elektrolyse-Vorrichtung gebildet sind.

FR 2 932 033 A1 offenbart Schaltkreise hoher Leistungsfähigkeit zur Elektrolyse von Aluminium.

CN 103296919 A offenbart Dreiphasen-Umrichter an speziellen Verschaltungen, die mit den Elektroden von Elektroyse-Zellen verbunden sind.

US 3,178,363 offenbart eine Vorrichtung und ein Verfahren zur Herstellung von Aluminium und anderen Metallen unter Verwendung elektrolytisch wirkender Öfen.

Der Erfindung liegt die Aufgabe zugrunde, die Gleichstromversorgung des Elektrolyseurs nochmals zu verbessern, insbesondere zu vereinfachen.

Dies wird durch eine Weiterbildung der Anordnung der eingangs genannten Art erreicht, die die Merkmale von Anspruch 1 aufweist. Vorgesehen ist eine örtliche Zuordnung der ersten Halbleiter-Bauelementgruppe zu dem ersten Gleichstromanschluss und der zweiten Bauelementgruppe zu dem zweiten Gleichstromanschluss.

Mit der erfindungsgemäßen Lösung wird eine anlagentechnisch vereinfachte Gleichstromversorgung des Elektrolyseurs sichergestellt. Dabei basiert die Erfindung auf der Erkenntnis, dass die im Stand der Technik örtlich gesehen auf kleineren Längenskalen vorgenommene zuordnende Zusammenfassung von einem Anteil der ersten Gruppe zusammen mit einem Anteil der zweiten Gruppe zu einem verschalteten elektrischen Power-Block und eines anderen Teils der ersten und der zweiten Gruppe zu einem zweiten ggf. anders verschalteten elektrischen Power-Block aufgegeben werden kann, wie auch auf der Aufgabe bisheriger örtlicher Zuordnung auf größeren Längenskalen in Form einer Separierung der oben erläuterten Anlagen-Baugruppen in unterschiedlichen Räumen (an unterschiedlichen Orten). Die erfindungsgemäße örtliche Zuordnung bedeutet somit eine zugeordnete Lagebeziehung hinsichtlich der relativen physikalischen Anordnung der Halbleiter-Bauelemente zu den Gleichstromanschlüssen.
Erfindungsgemäß beinhaltet die örtliche Zuordnung eine räumliche Nähe, wodurch auch Leitungsweg eingespart werden kann. So Die örtliche Zuordnung zeichnet sich dadurch aus, dass eine Mehrzahl, insbesondere alle Halbleiter-Bauelemente einer Gruppe einen geringeren Abstand von dem zugeordneten Gleichstromanschluss haben als von dem nicht zugeordneten Gleichstromanschluss.

In einer weiteren bevorzugten Ausführungsform ist vorgesehen, dass wenigstens eine, insbesondere jegliche gemeinsame körperliche Verbindung der elektrischen Ankopplung zweier oder mehrerer, insbesondere aller Halbleiter-Bauelemente einer Gruppe zu dem zugeordneten Gleichstromanschluss durch den zugeordneten Gleichstromanschluss selbst gegeben ist. Dadurch wird die maximal zu tragende Stromlast von ggf. noch verwendeten gemeinsamen körperlichen Leitungen herabgesetzt, so dass diese für einen niedrigeren Stromdurchgang und damit kleiner dimensioniert ausgelegt werden können.

In einer weiteren zweckmäßigen Ausführungsform der Erfindung ist vorgesehen, dass eine oder mehrere, insbesondere alle körperlichen Verbindungen der elektrischen Ankopplung eines Halbleiter-Bauteils einer Gruppe zu dem zugeordneten Gleichstromanschluss kürzer ist/sind als der körperliche Abstand zwischen den beiden Gleichstromanschlüssen. Letzterer kann bei den relevanten industriellen Elektrolyseuren durchaus in der Größenordnung von mehreren Metern liegen. Auf diese Weise kann wiederum Leitungsweg auf Gleichstromseite eingespart werden, bei Aufrechterhaltung der örtlichen Zuordnung.

In einer besonders bevorzugten Ausführungsform ist vorgesehen, dass wenigstens eines, bevorzugt mehrere und insbesondere alle Halbleiter-Bauelemente einer jeweiligen Gruppe mit ihrem gleichstromseitigen Anschluss körperlich unmittelbar mit dem zugeordneten Gleichstromanschluss verbunden ist/sind. Als gleichstromseitiger Anschluss eines Halbleiter-Bauelements wird dabei räumlich gesehen die elektrische Anschlusskontaktstelle verstanden, wie sie von einem Hersteller der Halbleiter-Bauelemente realisiert und vorgegeben ist. Betrachtet man beispielsweise in Form von flachen quaderförmigen Umhüllungen bereitgestellte Thyristoren, deren gleichstromseitiger Anschluss an einer Seitenfläche gebildet ist, so können diese unmittelbar an den Gleichstromanschlüssen des Elektrolyseurs angebracht werden. So ist vorgesehen, dass die Gleichstromanschlüsse in Form der Endplatten eines Elektrolyseurs vom Stapel-Typ gebildet sind. Diesbe-Gleichstromanschlüsse gebildet züglich sieht die Erfindung keine zwingende bauliche Wandlung von bereits in der Technik eingesetzten Elektrolyseuren hinsichtlich ihrer Gesamtstruktur vor. Durch geeignete Befestigungsmittel können die einzelnen Halbleiter-Bauelemente dann direkt an einer solchen Endplatte angebracht werden, wodurch auf Gleichstromübertragung durch Kabel oder Schienen vollständig verzichtet werden kann. Es verbleiben als Kabel- oder Leitungswege allerdings noch die Wechselstromkabel zwischen Transformator und Gleichrichter.

Hinsichtlich des Elektrolyseurs ist vorgesehen, dass dieser vom Stapel-Typ ist und wenigstens acht, bevorzugt wenigstens zwanzig, insbesondere wenigstens vierzig Platten aufweist. Es können jedoch auch noch deutlich mehr Platten verwendet werden, insbesondere ist an eine Plattenanzahl von durchaus auch achtzig Platten oder mehr gedacht. Der Abstand zwischen den beiden Endplatten des Elektrolyseurs vom Stapel-Typ liegt dann im Bereich von mehreren Metern, etwa drei bis sieben, insbesondere vier bis sechs Meter. Hinsichtlich der Plattenquerschnitte werden Größen im Bereich von wenigstens 0,2 m², insbesondere mehr als 0,4 m² bevorzugt. Es können jedoch auch nochmals größer angelegte Elektrolyseure herangezogen werden, mit mehr als einem halben Quadratmeter Querschnittsfläche, durchaus in dem Bereich von auch einem Quadratmeter Querschnittsfläche oder höher.

Desweiteren wird es bevorzugt, dass der Elektrolyseur für eine Leistung von wenigstens 30 kW ausgelegt ist, bevorzugt wenigstens 120 kW, insbesondere wenigstens 240 kW, und/oder einer Gleichstromversorgung von wenigstens 1000 A, bevorzugt wenigstens 2000 A, insbesondere wenigstens 4000 A unterliegt. Dabei können durchaus Leistungswerte von 300 kW erreicht oder auch überschritten werden, und Gleichstromversorgungen von 8000 bis 10.000 A jedenfalls durchaus erreicht oder überschritten werden, bezogen auf einen Elektrolyseur vom Stapel-Typ.

Es wird bevorzugt, dass der Drehstrom-Gleichrichter wenigstens sechspulsig ist. Dabei wird insbesondere bevorzugt, dass der Drehstrom-Gleichrichter zwölf- oder höherpulsig ist, insbesondere ein Zwölf-Puls-Gleichrichter ist. Eine solche Zwölf-Puls-Schaltung kann beispielsweise aus zwei in Serie geschalteten Drehstrom-Brückenschaltungen von Sechs-Puls-Gleichrichtern sein. Die Speisung der Brücken erfolgt dann über eine Stern-Stern-Schaltung einer Brücke und eine Stern-Dreieck-Schaltung der anderen Brücke. Die Zwölf-Puls-Schaltung stellt somit einen guten Kompromiss hinsichtlich beibehaltener Restwelligkeit im Gleichrichtbetrieb einerseits und Verschaltungsaufwand andererseits dar.

Grundsätzlich ist die Erfindung nicht auf besondere Typen der Halbleiter-Bauelemente eingeschränkt. So können beispielsweise Dioden wie auch Thyristoren zum Einsatz kommen. Bevorzugt wird jedoch der Einsatz von Thyristoren. Dadurch lässt sich die Ausgangsleistung verändern. So ist weiter bevorzugt vorgesehen, dass die Ausgangsleistung des Gleichrichters mittels einer Steuerung an die Thyristoren steuerbar ist, bevorzugt in einem Bereich von bis zu 50% bis 100% der maximalen Ausgangsleistung, insbesondere von bis zu 20% bis 100% der maximalen Ausgangsleistung.

Im Zusammenhang mit der erfindungsgemäßen Anordnung offenbart die Erfindung ebenfalls als schutzfähig eine Anlage zur Durchführung einer Elektrolyse, insbesondere von Wasser, mit wenigstens einem zwei Gleichstromanschlüsse aufweisenden Elektrolyseur und wenigstens einem Mehrfasen-, insbesondere Dreifasen-Gleichrichter, der mit einer Anordnung nach einem oder mehreren der oben erläuterten Eigenschaften ausgestattet ist.

Die Vorteile der erfindungsgemäßen Anlage ergeben sich aus der obigen Beschreibung der erfindungsgemäßen Anordnung.

Die Elektrolyseanlage kann dann ebenfalls mit einem Niederspannungs-Mittelspannungstransformator ausgestattet sein, der mit seiner Niederspannungsseite an den Gleichrichter angekoppelt ist.

Dabei kann die Elektrolyseanlage auch mehrere Elektrolyseure, insbesondere vom Stapel-Typ aufweisen. So ist vorgesehen, dass wenigstens zwei an einen Transformator angeschlossene Einheiten aus Elektrolyseur und Gleichrichter gebildet sein können.

Hinsichtlich des Gesamtsystems und dessen Anschluss an das Mittelspannungsnetz kann vorgesehen werden, dass die Elektrolyseanlage eine Schaltungseinheit zum wahlweisen Zuschalten oder Abkoppeln wenigstens zweier Transformatoren mit nachgeschalteten Elektrolyseeinheiten an das/von dem Mittelspannungsnetz aufweist. An einem Transformator können dann wiederum eine aber auch mehrere Einheiten aus Elektrolyseur und Gleichrichter hängen.

In einer weiteren bevorzugten Ausführungsform ist desweiteren eine katalytische Methanisierungsanlagenkomponente vorgesehen, deren Eingang an den Wasserstoffausgang des Elektrolyseurs gekoppelt wie auch eine CO₂-Quelle koppelbar/gekoppelt ist.

Gegenstand der Erfindung ist somit zum einen die beschriebene Anordnung und eine Elektrolyseanlage, allerdings auch eine aus einem Elektrolyseur und Halbleiter-Bauelementen eines Gleichrichter gebildete Baueinheit, sowie auch eine Endplatte für einen Elektrolyseur vom Stapel-Typ, welche in unmittelbarer Verbindung Halbleiter-Bauelemente aufweist, die elektrisch unter Heranziehung anderer Bauteile zur Funktionalität eines Gleichrichters verschaltbar sind.

Weitere Einzelheiten, Merkmale und Vorteile der Erfindung ergeben sich aus der nachfolgenden Beschreibung mit Bezug auf die beigefügten Figuren, von denen
Fig. 1 einen Elektrolyseur mit örtlich zugeordneten Halbleiter-Bauelementen und deren Verschaltung zeigt,
Fig. 2 die örtliche Zuordnung aus Fig. 1 zeigt, bei der die elektrische Verschaltung noch einen Transformator mitumfasst,
Fig. 3 schematisch einen Netzanschluss einer Elektrolyseanlage zeigt, und
Fig. 4 eine Endplatte eines Elektrolyseurs zeigt.

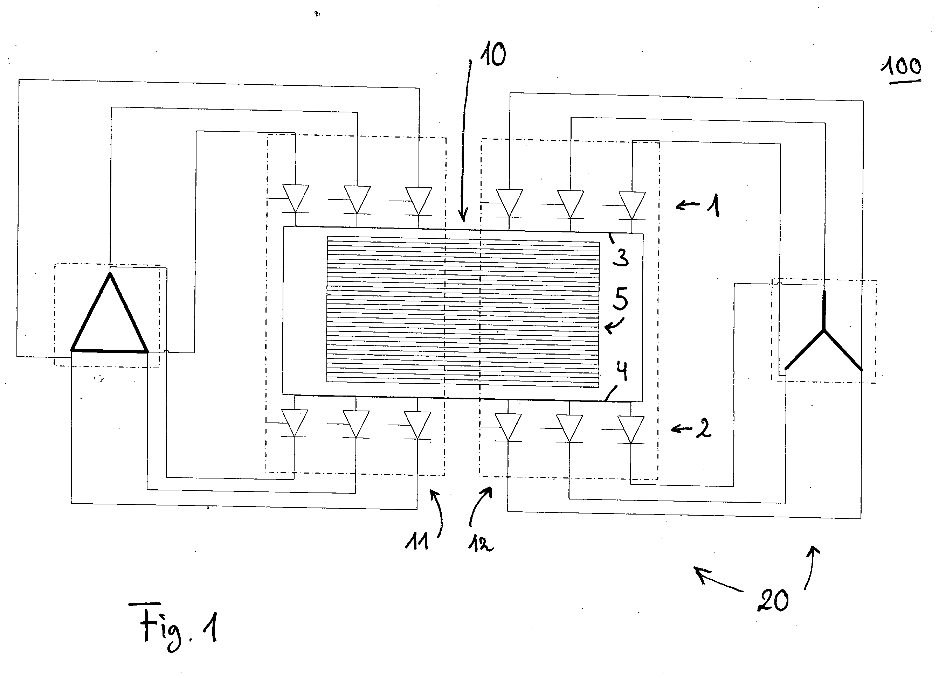

In Fig. 1 ist zunächst ein Elektrolyseur 10 vom Stapel-Typ dargestellt. Der Elektrolyseur 10 weist zwei Endplatten 3, 4 auf, die die Anode bzw. Kathode des Elektrolyseurs 10 bilden, und zwischen denen seine Platten 5 angeordnet sind. Die Dimensionierung des Elektrolyseurs ist in diesem Ausführungsbeispiel gegeben durch etwa 80 Platten eines Querschnitts von ca. 1 m² mit maximaler Abnahmeleistung von ca. 300 kW, jedoch ist die Erfindung selbstverständlich nicht auf diese genaue Dimensionierung eingeschränkt, sondern kann sich davon, etwa orientiert an den weiter oben erläuterten Dimensionierungen unterscheiden.

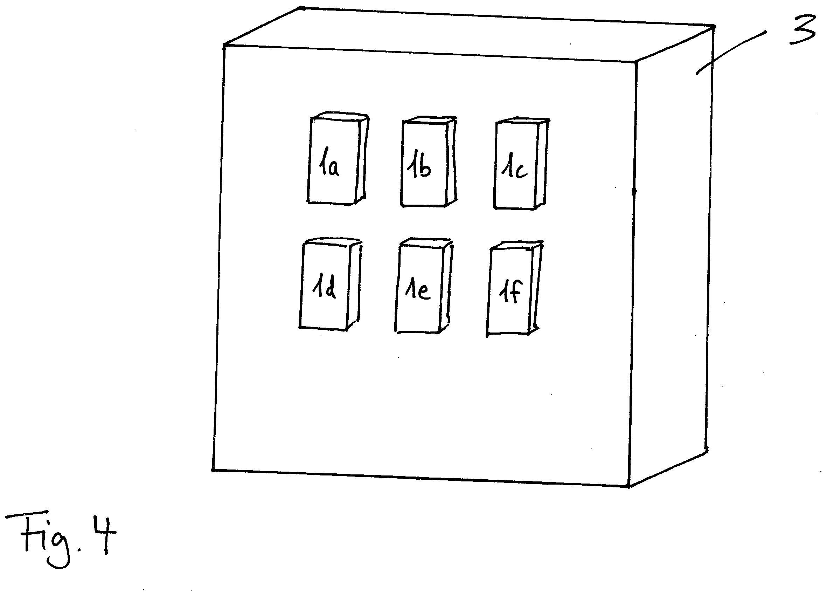

Hinsichtlich der Verschaltungsnatur der elektrischen Verschaltung ist der Elektrolyseur 10 für seine Gleichstromversorung in üblicher Weise mit einem Gleichrichter gekoppelt, der in dieser Ausführungsform durch einen Zwölf-Puls-Gleichrichter gebildet ist, wie unschwer aus Fig. 1 zu erkennen. Die Besonderheit und der Unterschied zu herkömmlichen gleichstromversorgten Elektrolyseuren liegt jedoch in der erfindungsgemäßen örtlichen Zuordnung der zusammengefasst mit "1" bezeichneten Gruppe von Halbleiter-Bauelementen, in diesem Ausführungsbeispiel Thyristoren, zur einen Endplatte 3 des Elektrolyseurs 10 und der anderen Thyristoren-Gruppe 2 zur zweiten Endplatte 4 des Elektrolyseurs 10. In diesem Ausführungsbeispiel ist die örtliche Zuordnung dadurch realisiert, dass sämtliche Thyristoren, beispielsweise der anodenseitigen Thyristoren-Gruppe 1 unmittelbar und direkt mit der Endplatte 3 verbunden ist, während die kathodenseitigen Thyristoren der Thyristoren-Gruppe 2 unmittelbar und direkt an die andere Endplatte 4 angeschlossen sind. Dies ist für Endplatte 3 nochmals in Fig. 4 dargestellt, mit Thyristoren 1a, 1b, 1c, 1d, 1e und 1f.

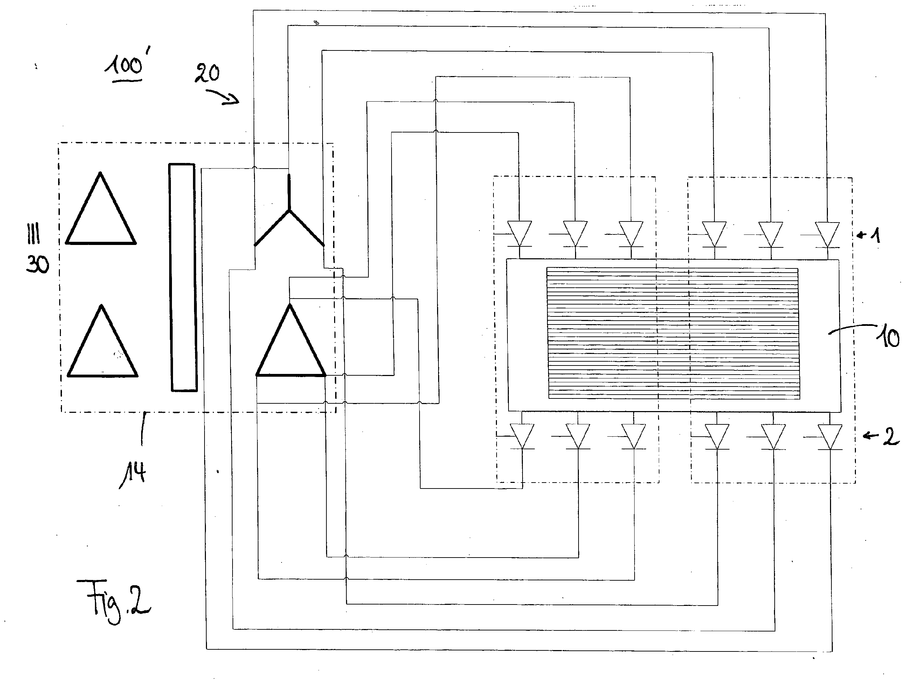

Dabei werden die schaltungstechnischen Blöcke 11 und 12, die jeweils drei kathoden- und drei anodenseitige Thyristoren enthalten, hinsichtlich ihrer räumlichen Lage aufgebrochen und umsortiert. Dabei ist aus Fig. 1 unmittelbar zu erkennen, dass für den Gleichrichter 20 und dessen Ankopplung an den Elektrolyseur 10 nur noch Wechselstromleitungen erforderlich sind, aber keine Gleichstrom-Leitungen mehr. Dies ist noch besser aus Fig. 2 zu erkennen, in welcher der Zwölf-Puls-Gleichrichter 20 über Transformatorschaltung 14 an das mit 30 bezeichnete Mittelspannungsnetz angeschlossen ist.

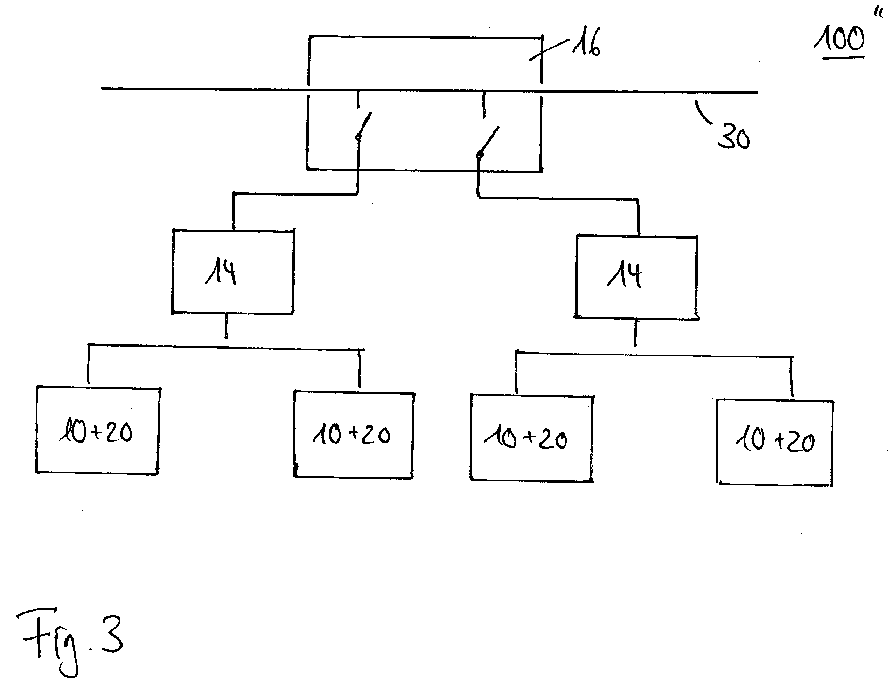

Fig. 3 zeigt ein Beispiel für den Anschluss einer mit dieser Anordnung gleichstromversorgten Elektrolyseanlage an das Mittelspannungsnetz 30. Zwei aus einem auf die Niederspannungsebene transferierende Transformatoren 14 und hier beispielsweise jeweils zwei Elektrolyseeinheiten aus Elektrolyseuren 10 und Gleichrichtern 20 sind voneinander unabhängig an das Mittelspannungsnetz ankoppelbar. Die dazu vorgesehene Schalteinheit 16 wird von einer nicht gezeigten Steuerung geschaltet, beispielsweise erfolgt eine Zuschaltung bevorzugt bei im Netz vorhandener Überschussleistung.

Die Darstellung aus Fig. 4 mit den auf der Endplatte 3 angebrachten Thyristoren ist schematischer Natur und gibt nicht zwangsläufig die tatsächlichen Größenverhältnisse und Thyristorformen wieder, die z. B. scheibenförmig mit etwa 60 bis 80 mm Durchmesser und etwa 20 bis 30 mm Höhe sein können. Die Anbringung erfolgt beispielsweise über eine oder mehrere von der Endplatte 3 isolierte Spannplatte(n), wobei die Thyristoren zwischen diesen und der Endplatte 3 durch Klemmkräfte gehalten werden. Zusätzlich kann an diesem Anbringungsbereich noch eine Kühlung, beispielsweise Wasserkühlung, vorgesehen werden.

Die bislang erfolgte allgemeine und spezielle Beschreibung bezieht sich auf einen Elektrolyseur als Gleichstromverbraucher, der Wirkungsbereich der Erfindung kann sich jedoch auch auf andere Gleichstromverbraucher im industriellen Maßstab erstrecken. Die Erfindung offenbart die Gegenstände der nachfolgenden Ansprüche somit auch in verallgemeinerter Form, indem "Elektrolyseur" durch "Gleichstromverbraucher" ersetzt wird.

Die Erfindung ist nicht auf das in den Figuren dargestellte Ausführungsbeispiel eingeschränkt. Vielmehr können die in den nachstehenden Ansprüchen enthaltenen Merkmale wie auch die der obigen Beschreibung einzeln oder in Kombination für die Verwirklichung der Erfindung in ihren verschiedenen Ausführungsformen wesentlich sein.

## Patentansprüche

1. Anordnung zur Versorgung eines Elektrolyseurs (10) mit Gleichstrom, mit
einem zur Wasserstofferzeugung ausgelegten Elektrolyseur (10) vom Stapel-Typ, der wenigstens 8 Platten (5) aufweist,
einer elektrischen Kopplung einer ersten Gruppe (1) von Halbleiter-Bauelementen eines Mehrfasen-, insbesondere Dreifasen-Gleichrichters (20) an den in Form einer leitfähigen Endplatte gebildeten ersten Gleichstromanschluss des Elektrolyseurs und einer zweiten Gruppe (2) von Halbleiter-Bauelementen des Gleichrichters an den in Form der anderen leitfähigen Endplatte gebildeten zweiten Gleichstromanschluss (4) des Elektrolyseurs,
**gekennzeichnet durch** eine örtliche Zuordnung der ersten Halbleiter-Bauelementgruppe (1) zu dem ersten Gleichstromanschluss (3) und der zweiten Bauelementgruppe (2) zu dem zweiten Gleichstromanschluss (4), wobei die örtliche Zuordnung eine räumliche Nähe beinhaltet, wodurch auch Leitungsweg eingespart werden kann, indem eine Mehrzahl der Halbleiter-Bauelemente einer jeden Gruppe (1/2) einen geringeren Abstand von dem zugeordneten Gleichstromanschluss (3/4) als von dem nicht zugeordneten Gleichstromanschluss (4/3) haben.

2. Anordnung nach Anspruch 1, bei der dieser geringere relative Abstand für alle Halbleiter-Bauelemente gegeben ist.

3. Anordnung nach Anspruch 1 oder 2, bei der wenigstens eine, insbesondere jegliche gemeinsame körperliche Verbindung der elektrischen Ankopplung zweier oder mehrerer, insbesondere aller Halbleiter-Bauelemente einer Gruppe (1/2) zu dem zugeordneten Gleichstromanschluss (3/4) durch den zugeordneten Gleichstromanschluss (3/4) selbst gegeben ist.

4. Anordnung nach einem der vorhergehenden Ansprüche, bei der eine oder mehrere, insbesondere alle körperlichen Verbindungen der elektrischen Ankopplung eines Halbleiter-Bauteils einer Gruppe (1/2) zu dem zugeordneten Gleichstromanschluss (3/4) kürzer ist/sind als der räumliche Abstand zwischen den beiden Gleichstromanschlüssen (3, 4).

5. Anordnung nach einem der vorhergehenden Ansprüche, bei der wenigstens eines, mehrere oder insbesondere alle Halbleiter-Bauelemente einer jeweiligen Gruppe (1/2) mit ihrem gleichstromseitigen Anschluss körperlich unmittelbar mit dem zugeordneten Gleichstromanschluss (3/4) verbunden ist/sind.

6. Anordnung nach einem der vorhergehenden Ansprüche, bei der die Endplatten aus einem Metall gebildet sind.

7. Anordnung nach Anspruch 5 oder 6, bei der wenigstens eines, insbesondere alle Halbleiter-Bauelemente einer jeweiligen Gruppe (1/2) unmittelbar auf der zugeordneten Platte angebracht ist/sind.

8. Anordnung nach einem der vorhergehenden Ansprüche, bei der der Elektrolyseur wenigstens 20, insbesondere wenigstens 40 Platten (5) aufweist.

9. Anordnung nach einem der vorhergehenden Ansprüche, bei der der Elektrolyseur für eine Leistung von wenigstens 30 kW ausgelegt ist, bevorzugt wenigstens 120 kW, insbesondere wenigstens 240 kW, und/oder einer Gleichstromversorgung von wenigstens 1000 A, bevorzugt wenigstens 2000 A, insbesondere wenigstens 4000 A unterliegt.

10. Anordnung nach einem der vorhergehenden Ansprüche, bei der der Drehstrom-Gleichrichter wenigstens sechspulsig ist.

11. Anordnung nach Anspruch 10, bei der der Drehstrom-Gleichrichter (20) 12- oder höherpulsig ist, insbesondere ein 12-Puls-Gleichrichter ist.

12. Anordnung nach einem der vorhergehenden Ansprüche, bei der die Halbleiter-Bauelemente aus der Gruppe Dioden und Thyristoren ausgewählt sind, und insbesondere Thyristoren sind.

13. Anordnung nach Anspruch 12, bei der die Ausgangsleistung des Gleichrichters mittels einer Steuerung für die Thyristoren steuerbar ist, bevorzugt in einem Bereich von bis zu 50% bis 100% der maximalen Ausgangsleistung, insbesondere von bis zu 20% bis 100% der maximalen Ausgangsleistung.

14. Elektrolyseanlage (100, 100', 100") zur Wasserstofferzeugung mittels Elektrolyse mit wenigstens einem Mehrfasen-, insbesondere Dreifasen-Gleichrichter (20), und mit einem Niederspannungs-Mittelspannungstransformator (14), der mit seiner Niederspannungsseite an den Gleichrichter (20) angekoppelt ist, **gekennzeichnet durch** eine Anordnung nach einem der Ansprüche 1 bis 13.

15. Elektrolyseanlage nach Anspruch 14, mit wenigstens zwei an einen Transformator angeschlossenen Einheiten (10, 20) aus Elektrolyseur (10) und Gleichrichter (20).

16. Elektrolyseanlage nach Anspruch 14 oder 15, mit einer Schaltungseinheit (16) zum wahlweisen Zuschalten oder Abkoppeln wenigstens zweier Transformatoren (14) mit nachgeschalteten Elektrolyseeinheiten (10+20) an das/von dem Mittelspannungsnetz (30)

17. Elektrolyseanlage nach einem der Ansprüche 14 bis 16, mit einem katalytisch wirkenden Methaniseur, dessen Eingang an den Wasserstoffausgang einer oder mehrerer Elektrolyseeinheiten angekoppelt ist.

## Claims

1. An assembly for supplying an electrolyzer (10) with direct current, comprising
a stack-type electrolyzer (10) designed to generate hydrogen and which has at least 8 plates (5),
electrical coupling of a first group (1) of semiconductor components of a multi-phase, in particular three-phase rectifier (20) to the first direct current connector of the electrolyzer made in the form of a conductive end plate and of a second group (2) of semiconductor components of the rectifier to the second direct current connector (4) of the electrolyzer made in the form of the other conductive end plate,
**characterised by** local assignment of the first semiconductor component group (1) to the first direct current connector (3) and of the second component group (2) to the second direct current connector (4), the local assignment including a spatial proximity, as a result of which the conduction path can also be reduced, a plurality of the semiconductor components of each group (1/2) being a smaller distance away from the assigned direct current connector (3/4) than from the non-assigned direct current connector (4/3).

2. The assembly according to Claim 1, wherein this smaller relative distance applies to all the semiconductor components.

3. The assembly according to Claim 1 or 2, wherein at least one, in particular any common physical connection of the electrical coupling of two or more, in particular of all the semiconductor components of a group (1/2) to the assigned direct current connector (3/4) is provided by the assigned direct current connector (3/4) itself.

4. The assembly according to any of the preceding claims, wherein one or more, in particular all the physical connections of the electrical coupling of a semiconductor component of a group (1/2) to the assigned direct current connector (3/4) is/are shorter than the spatial distance between the two direct current connectors (3, 4).

5. The assembly according to any of the preceding claims, wherein at least one, more or in particular all the semiconductor components of a respective group (1/2) is/are physically connected with their direct current-side connector directly to the assigned direct current connector (3/4).

6. The assembly according to any of the preceding claims, wherein the end plates are formed from a metal.

7. The assembly according to Claim 5 or 6, wherein at least one, in particular all the semiconductor components of a respective group (1/2) is/are attached directly to the assigned plate.

8. The assembly according to any of the preceding claims, wherein the electrolyzer has at least 20, in particular at least 40 plates (5).

9. The assembly according to any of the preceding claims, wherein the electrolyzer is designed for an output of at least 30 kW, preferably at least 120 kW, in particular at least 240 kW, and/or a direct current supply of at least 1000 A, preferably at least 2000 A, in particular at least 4000 A is applied to said electrolyzer.

10. The assembly according to any of the preceding claims, wherein the three-phase rectifier is at least a six-pulse rectifier.

11. The assembly according to Claim 10, wherein the three-phase rectifier (20) is a 12- or more pulse rectifier, in particular a 12-pulse rectifier.

12. The assembly according to any of the preceding claims, wherein the semiconductor components are chosen from the diodes and thyristors group, and in particular are thyristors.

13. The assembly according to Claim 12, wherein the initial output of the rectifier can be controlled by a controller for the thyristors, preferably in a range of up to 50% to 100% of the maximum output power, in particular of up to 20% to 100% of the maximum output power.

14. An electrolysis system (100, 100', 100") for generating hydrogen by means of electrolysis, having at least one multi-phase, in particular three-phase rectifier (20), and having a low-voltage medium voltage transformer (14) which is coupled by its low-voltage side to the rectifier (20), **characterised by** an assembly according to any of Claims 1 to 13.

15. The electrolysis system according to Claim 14, having at least two units (10, 20) composed of an electrolyzer (10) and a rectifier (20) connected to a transformer.

16. The electrolysis system according to Claim 14 or 15, having a switching unit (16) for optionally connecting or disconnecting at least two transformers (14) with downstream electrolysis units (10+20) to/from the medium voltage network (30).

17. The electrolysis system according to any of Claims 14 to 16, having a catalytically operating methanator, the input of which is connected to the hydrogen output of one or more electrolysis units.

## Revendications

1. Dispositif d'alimentation d'un électrolyseur (10) en courant continu, comportant :
un électrolyseur (10) du type à empilage, conçu pour produire de l'hydrogène et présentant au moins 8 plaques (5),
un couplage électrique d'un premier groupe (1) de composants semi-conducteurs d'un redresseur (20) polyphasé, notamment triphasé, à la première borne à courant continu de l'électrolyseur, sous la forme d'une plaque terminale conductrice, et d'un deuxième groupe (2) de composants semi-conducteurs du redresseur à la deuxième borne à courant continu (4) de l'électrolyseur, sous la forme de l'autre plaque terminale conductrice,
**caractérisé par** une affectation locale du premier groupe de composants semi-conducteurs (1) à la première borne à courant continu (3) et du deuxième groupe de composants (2) à la deuxième borne à courant continu (4), ladite affectation locale comprenant une proximité dans l'espace permettant d'économiser le chemin de conduction grâce au fait qu'une pluralité de composants semi-conducteurs de chaque groupe (1/2) sont à une moindre distance de la borne à courant continu (3/4) à laquelle ils sont affectés que de la borne à courant continu (4/3) à laquelle ils ne sont pas affectés.

2. Dispositif selon la revendication 1, dans lequel cette distance relative moindre est donnée pour tous les composants semi-conducteurs.

3. Dispositif selon la revendication 1 ou 2, dans lequel au moins une, notamment toute liaison physique commune du couplage électrique d'au moins deux, et notamment de tous les composants semi-conducteurs d'un groupe (1/2) à la borne à courant continu (3/4) qui lui est affectée est donnée par ladite borne à courant continu (3/4) qui lui est affectée.

4. Dispositif selon l'une quelconque des revendications précédentes, dans lequel au moins une et notamment toutes les liaisons physiques du couplage électrique d'un composant semiconducteur d'un groupe (1/2) à la borne à courant continu (3/4) qui lui est affectée est/sont plus courte(s) que la distance spatiale séparant les deux bornes à courant continu (3, 4).

5. Dispositif selon l'une quelconque des revendications précédentes, dans lequel au moins un, plusieurs et notamment tous les composants semi-conducteurs d'un groupe (1/2) respectif est/sont reliés par sa/leur borne côté courant continu, de manière physique directe, à la borne à courant continu (3/4) qui lui/leur est affectée.

6. Dispositif selon l'une quelconque des revendications précédentes, dans lequel les plaques terminales se composent d'un métal.

7. Dispositif selon la revendication 5 ou 6, dans lequel au moins un et notamment tous les composants semi-conducteurs d'un groupe (1/2) respectif est/sont disposés directement sur la plaque qui lui/leur est affectée.

8. Dispositif selon l'une quelconque des revendications précédentes, dans lequel l'électrolyseur présente de préférence au moins 20, notamment au moins 40 plaques (5).

9. Dispositif selon l'une quelconque des revendications précédentes, dans lequel l'électrolyseur est conçu pour une puissance d'au moins 30 kW, de préférence d'au moins 120 kW, notamment d'au moins 240 kW, et/ou pour être soumis à une alimentation en courant continu d'au moins 1000 A, de préférence d'au moins 2000 A, notamment d'au moins 4000 A.

10. Dispositif selon l'une quelconque des revendications précédentes, dans lequel le redresseur triphasé est au moins à six impulsions.

11. Dispositif selon la revendication 10, dans lequel le redresseur (20) triphasé est au moins à 12 impulsions, en étant notamment exactement à douze impulsions.

12. Dispositif selon l'une quelconque des revendications précédentes, dans lequel les composants semi-conducteurs sont choisis dans le groupe des diodes et thyristors et consistent notamment en des thyristors.

13. Dispositif selon la revendication 12, dans lequel la puissance de sortie du redresseur est réglable au moyen d'un dispositif de commande pour les thyristors, de préférence dans une plage allant jusqu'à 50 % voire 100 % de la puissance de sortie maximale, notamment allant jusqu'à 20 % voire 100 % de la puissance de sortie maximale.

14. Installation d'électrolyse (100, 100', 100") pour la production d'hydrogène au moyen d'une électrolyse, comprenant au moins un redresseur (20) polyphasé, notamment triphasé, et un transformateur basse tension/moyenne tension (14) couplé par son côté basse tension au redresseur (20), **caractérisée par** un dispositif selon l'une des revendications 1 à 13.

15. Installation d'électrolyse selon la revendication 14, comportant au moins deux unités (10, 20), composées d'un électrolyseur (10) et d'un redresseur (20), qui sont reliées à un transformateur.

16. Installation d'électrolyse selon la revendication 14 ou 15, comportant une unité de commutation (16) permettant de coupler ou de découpler, par rapport au réseau de moyenne tension (30), au moins deux transformateurs (14) à unités d'électrolyses (10+20) montées en aval.

17. Installation d'électrolyse selon l'une des revendications 14 à 16, comportant un méthaniseur à action catalytique dont l'entrée est couplée à la sortie d'hydrogène d'une ou plusieurs unités d'électrolyse.
